# DEMANDE DE BREVET EUROPEEN

(11) **EP 2 246 674 A1**
(43) Date de publication de la demande: **03.11.2010**
(21) Numéro de dépôt: 09305357.7
(22) Date de dépôt: 27.04.2009
(51) Int. Cl.: G01F 15/00, G01F 15/06, F16B 41/00

(54) **Module de télé-relève pour compteur de fluide**

(71) Demandeur: Actaris SAS, 92100 Boulogne Billancourt (FR)
(72) Inventeur: Guillot-Jerome, Denis, 01310, BUELLAS (FR); Renoud, Anthony, 01570, FEILLENS (FR)
(74) Mandataire: Gauer, Pierre

(57) **Abrégé**

L'invention a pour objet un module de télé-relevé (5) pour compteur de fluide (1), comprenant un corps de module (11), un élément de fixation (7) apte à fixer le corps de module (11) sur le compteur (1) et un dispositif de plombage (9) à effet visuel apte à recouvrir l'élément de fixation (7), **caractérisé en ce que** le module (5) comporte un moyen de liaison (4A,4B) entre l'élément de fixation (7) et le dispositif de plombage (9) et/ou entre le dispositif de plombage (9) et le corps de module (11).

## Description

L'invention se rapporte à un module de télé-relevé destiné à être fixé sur le capot d'un compteur de fluide, en particulier d'un compteur d'eau.

Un tel module de télé-relevé est destiné au relevé à distance de la consommation de fluide et est installé sur des compteurs éventuellement déjà installés. Pour ce faire, le module de télé-relevé est appliqué sur la face supérieure du capot du totalisateur du compteur, afin d'assurer un positionnement précis de l'agencement de lecture du module par rapport à un agencement interne au totalisateur et permettant la détection de la consommation, par exemple le disque indicateur. Cette détection peut être effectuée de façon optique, capacitive, inductive ou autre, par exemple en scrutant le déplacement du disque indicateur.

Il est connu, comme décrit dans le document EP 1 586 869, de réaliser la fixation d'un module de télé-relevé sur le capot d'un compteur de fluide par l'intermédiaire d'un élément mâle fileté, de type vis, traversant le module et coopérant avec un insert femelle taraudé surmoulé dans le capot du compteur et destiné à recevoir l'élément mâle par vissage.

Dans un tel agencement, un dispositif de plombage à effet visuel peut être inséré à force dans une cavité conformée dans le capot du module et entourant la tête de la vis. Ce dispositif de plombage est une pièce de forme sensiblement oblongue de matière plastique souple qui est encastrée dans la cavité, qui recouvre la tête de la vis et qui ne peut être enlevée, par exemple au moyen d'un tournevis, qu'avec sa destruction au moins partielle, ce qui permet de détecter visuellement l'enlèvement du module ou la fraude.

Un problème qui peut survenir est que l'installateur peut oublier d'encastrer le dispositif de plombage une fois qu'il a vissé le module sur le capot du compteur. A l'inverse, il peut également arriver qu'il encastre le dispositif de plombage en ayant omis de visser le module de télé-relevé sur le capot du compteur.

L'invention vise à remédier à ces inconvénients.

En particulier, l'invention propose un module de télé-relevé pour compteur de fluide permettant de remédier à un manque de vigilance de l'installateur lors de l'installation du module sur le compteur et de renforcer par conséquent la sécurisation du compteur.

L'invention a ainsi pour objet un module de télé-relevé pour compteur de fluide, comprenant un corps de module, un élément de fixation apte à fixer le corps de module sur le compteur et un dispositif de plombage à effet visuel apte à recouvrir l'élément de fixation.

Conformément à l'invention, le module comporte un moyen de liaison entre l'élément de fixation et le dispositif de plombage et/ou entre le dispositif de plombage et le corps de module.

Ainsi, grâce au(x) moyen(s) de liaison, il est possible de pallier un manque de vigilance de l'installateur.

On peut envisager que l'élément de fixation est relié au dispositif de plombage, ou que le plombage est relié au corps de module. On peut également envisager que le corps de module comprend un moyen de pré-maintien de l'élément de fixation, et notamment que le dispositif de plombage est relié au corps de module et que l'élément de fixation est pré-maintenu dans le corps de module.

Le moyen de liaison peut être une languette flexible.

La languette flexible fait avantageusement partie intégrante du dispositif de plombage.

La languette flexible comprend de préférence une bague, pour permettre d'accueillir l'élément de fixation.

Le corps de module peut comprendre un orifice traversant. L'élément de fixation est avantageusement une vis.

Le corps de module peut comprendre une cavité apte à entourer la tête de la vis.

Le dispositif de plombage peut être inséré à force dans la cavité.

D'autres caractéristiques et avantages de la présente invention apparaîtront plus clairement à la lecture de la description suivante donnée à titre d'exemple illustratif et non limitatif et faite en référence aux dessins annexés sur lesquels :
- la figure 1 est une vue en perspective éclatée d'un module de télé-relevé selon l'invention associé à un compteur de fluide, conformément à un premier mode de réalisation, et
- la figure 2 est une vue en perspective éclatée d'un module de télé-relevé selon l'invention associé à un compteur de fluide, conformément à un deuxième mode de réalisation.

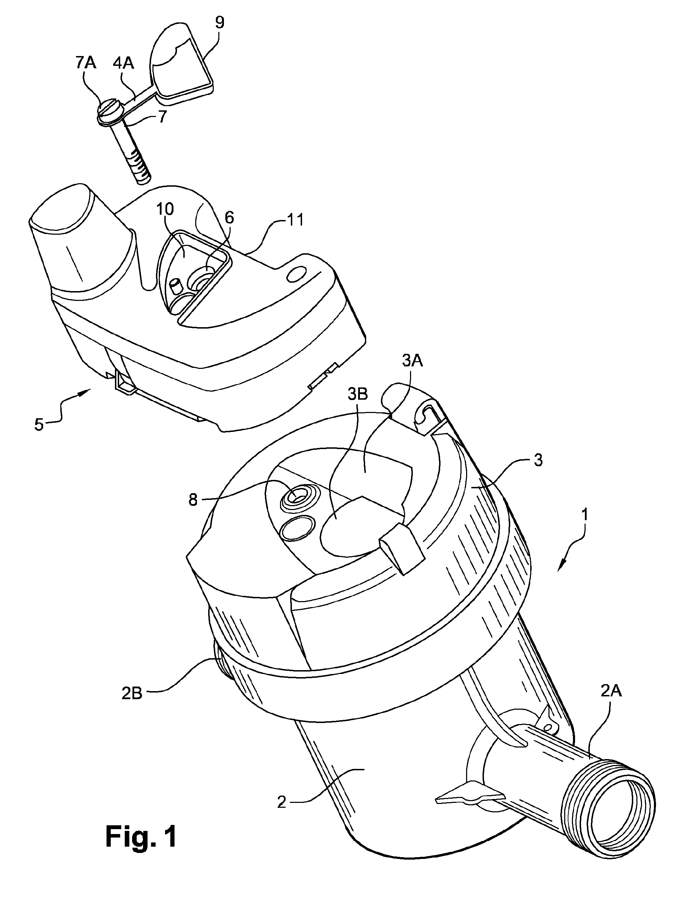

Le compteur 1 de fluide, en particulier d'eau, tel qu'illustré à la figure 1, comprend un carter 2, également appelé bâche, muni d'une canalisation d'arrivée de fluide 2A et d'une canalisation de sortie de fluide 2B. Un élément mesurant, tel qu'une turbine ou une chambre volumétrique, comprenant un arbre, est disposé à l'intérieur du carter 2.

Le carter 2 est surmonté d'un totalisateur 3 contenant un mécanisme de transmission et de réduction de la rotation de l'arbre de l'élément mesurant contenu dans le carter 2 vers un dispositif d'affichage 3A de la consommation de fluide et un disque indicateur rotatif 3B.

Un module de détection 5 par télé-relevé est posé sur la paroi supérieure du compteur 1. Le module de détection 5 est muni d'un corps de module 11 comprenant des moyens permettant la détection à distance de la consommation d'eau ainsi que son sens de circulation. Pour sa fixation au compteur 1, le module de détection 5 comporte un orifice traversant 6 dans lequel est introduit une vis 7 destinée à être vissée dans un insert métallique 8 taraudé surmoulé dans le capot du totalisateur 3.

La vis 7, munie d'une tête 7A, est associée à un dispositif de plombage 9 à effet visuel. Le dispositif de plombage 9 est une pièce en matière souple insérée à force dans une cavité 10 agencée dans le capot du module 5 et entourant la tête 7A de la vis 7.

Conformément à un premier mode de réalisation, le dispositif de plombage 9 est solidaire de la vis 7 au moyen d'une languette flexible 4A, formant avantageusement une pièce avec le dispositif de plombage 9. La languette flexible 4A comporte à son extrémité libre une bague dans laquelle est encastrée la vis 7, le diamètre de la bague étant sensiblement égal au diamètre de la vis 7. La vis 7 est ainsi solidarisée au dispositif de plombage 9. La vis 7 peut être disposée dans l'orifice traversant 6 du module 5 et son extrémité peut être vissée dans l'insert métallique 8 taraudé surmoulé dans le capot du totalisateur 3. Par pliage à 180° de la languette 14A, le dispositif de plombage 9 est ensuite disposé dans la cavité 10 agencée dans le capot du module 5 et entourant la tête 7A de la vis 7.

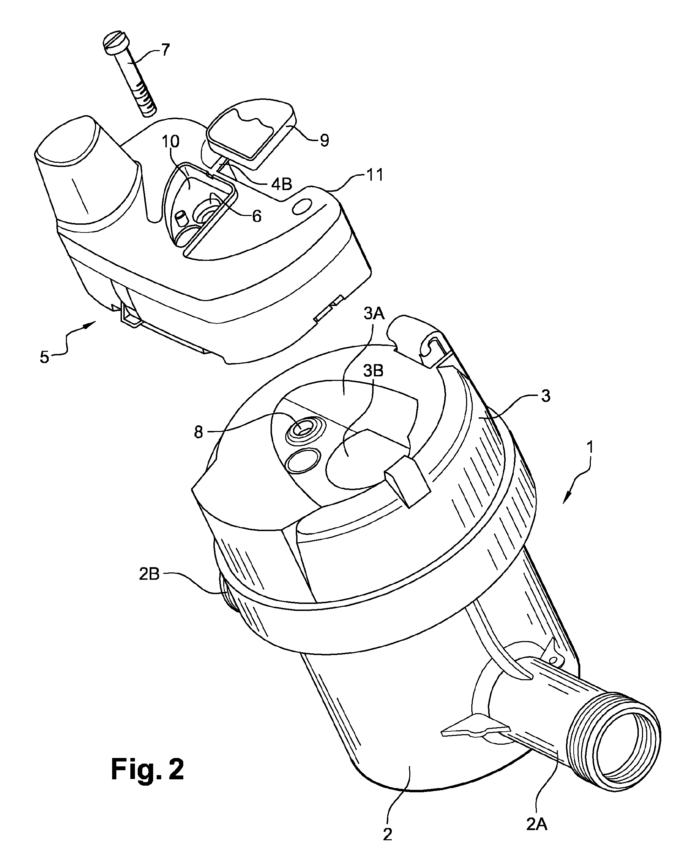

Dans un deuxième mode de réalisation, tel qu'illustré à la figure 2, le dispositif de plombage à effet visuel 9 est solidaire du corps de module 11, plus précisément de son capot, au moyen d'une languette 4B flexible formant une pièce avec le dispositif de plombage 9 et le corps de module 11. Le dispositif de plombage 9 est donc ainsi retenu avec le module de télé-relevé 5. La vis 7 peut être disposée dans l'orifice traversant 6 du module et son extrémité peut être vissée dans l'insert métallique 8 taraudé surmoulé dans le capot du totalisateur 3. Par rotation à 180° de la languette 4B, le dispositif de plombage 9 est ensuite disposé dans la cavité 10 agencée dans le capot du module 5 et entourant la tête 7A de la vis 7.

## Revendications

1. Module de télé-relevé (5) pour compteur de fluide (1), comprenant un corps de module (11), un élément de fixation (7) apte à fixer le corps de module (11) sur le compteur (1) et un dispositif de plombage (9) à effet visuel apte à recouvrir l'élément de fixation (7), **caractérisé en ce que** le module (5) comporte un moyen de liaison (4A,4B) entre l'élément de fixation (7) et le dispositif de plombage (9) et/ou entre le dispositif de plombage (9) et le corps de module (11).

2. Module (5) selon la revendication 1, **caractérisé en ce que** le moyen de liaison (4A,4B) est une languette flexible (4A,4B).

3. Module (5) selon la revendication 2, **caractérisé en ce que** la languette flexible (4A,4B) fait partie intégrante du dispositif de plombage (9).

4. Module (5) selon la revendication 2 ou 3, **caractérisé en ce que** la languette flexible (4A,4B) comprend une bague.

5. Module (5) selon l'une des revendications 1 à 4, **caractérisé en ce que** le corps de module (11) comprend un orifice traversant (6).

6. Module (5) selon l'une des revendications 1 à 5, **caractérisé en ce que** l'élément de fixation est une vis (7).

7. Module (5) selon la revendication 6, **caractérisé en ce que** le corps de module (11) comprend une cavité (10) apte à entourer la tête (7A) de la vis (7).

8. Module (5) selon la revendication 7, **caractérisé en ce que** le dispositif de plombage (9) est inséré à force dans la cavité (10).
